# EUROPÄISCHE PATENTSCHRIFT

(11) **EP 2 336 619 B1**
(45) Veröffentlichungstag und Bekanntmachung des Hinweises auf die Patenterteilung: **05.04.2017**
(21) Anmeldenummer: 10015616.5
(22) Anmeldetag: 14.12.2010
(51) Int. Cl.: F16K 31/06

(54) **Ventil mit einem Betätigungsglied**
Valve with an actuator
Soupape avec actionneur

(30) Priorität: 15.12.2009 DE 102009058164
(43) Veröffentlichungstag der Anmeldung: 22.06.2011
(73) Patentinhaber: Firma SVM Schultz Verwaltungs-GmbH & Co. KG, 87700 Memmingen (DE)
(72) Erfinder: Weiss, Johann, 88239 Wangen (DE)
(74) Vertreter: Schulz, Manfred

(56) Entgegenhaltungen:
- EP-A1- 0 578 168
- EP-A1- 1 371 888
- EP-A2- 1 045 150
- WO-A1-2008/043381
- DE-A1- 4 309 695
- DE-A1- 4 405 657

## Beschreibung

Die Erfindung betrifft ein Ventil mit an einem Betätigungsglied vorgesehenem Stößel, der eine Durchgangsöffnung für ein Medium je nach Stellung des Betätigungsgliedes öffnet oder schließt, und zumindest die Federkraft einer Stößelfeder den Stößel in der geschlossenen Stellung auf die Durchgangsöffnung drückt.

Es sind Ventile bekannt, bei welchen das Betätigungsglied als Wippanker ausgebildet ist und der balkenartige Wippanker einen oder mehrere Stößel trägt, die je für das Öffnen beziehungsweise Verschließen einer Durchgangsöffnung dienen. Die Durchgangsöffnung steht dabei in Verbindung mit einem entsprechenden Fluidanschluss, als Fluid beziehungsweise Medium sind zum Beispiel Gase, Druckluft aber auch Flüssigkeiten vorgesehen.

Bei den bekannten Ventilen wird der Wippanker durch einen Elektromagneten betätigt, der bei Bestromung des Elektromagneten den Wippanker anzieht, der dann eine Verschwenkbewegung ausführt. In der jeweiligen Stellung des Wippankers wird die eine oder die andere der Durchlassöffnungen geöffnet beziehungsweise geschlossen. Dies erfolgt durch das wechselseitige Anpressen eines Dichtelementes auf der Durchgangsöffnung. Die bekannten Ventilkonstruktionen weisen eine Rückstellfeder für den Wippanker auf, die Rückstellfeder dient dabei dazu, den Wippanker in der abgefallenen Situation (die Spule ist nicht mehr bestromt) in die erste Stellung zurück zustellen. Das Dichtelement ist dabei auf dem Wippanker fest angeordnet und weist eine entsprechende Elastizität auf, um einen sicheren Verschluss mit der Durchgangsöffnung herzustellen. Allerdings ist gerade bei dem Anwendungsfall eines Wippankers zu beachten, dass das Dichtelement nicht in einer linearen Bewegung gegen die Durchgangsöffnung angestellt wird, sondern in einer KreisBogen-Bewegung mit der Gefahr, dass eine nicht hunderprozentige Abdichtung erfolgt. Tatsächlich werden auch gewisse Leckageraten in entsprechenden Ventilkonstruktionen, gerade bei zunehmendem Alter der Ventile, festgestellt. Ein weiterer Nachteil herkömmlicher Ventilkonstruktionen ist, dass die Rückstellfeder, die auf den Wippanker wirkt, in der Ventilkammer beziehungsweise im Ventilraum angeordnet ist. Hieraus resultieren Strömungswiderstände für das die Ventilkammer durchströmende Fluid beziehungsweise Medium. Auch besteht die Gefahr, dass sich an der Rückstellfeder Ablagerungen und dergleichen bilden können, was unerwünscht ist.

Das Dokument WO 2008/043381 A1 zeigt ein Hebelventil, welches in eine erste Position vorgespannt ist, in welcher ein Anschluss verschlossen ist, und welches betätigt werden kann, wobei ein erster Kolben entgegengesetzt und im wesentlichen parallel zu einem zweiten Kolben bewegt wird.

Das Dokument DE 43 09 695 A1 zeigt eine Steuereinrichtung für ein Magnetventil mit zwei nebeneinander angeordneten Elektromagneten, denen jeweils ein zu betätigendes Ventilglied zugeordnet ist. Außerhalb jeweiliger Spulen der Elektromagnete befindet sich eine Jocheinrichtung zur Leitung von Magnetfeldern. Die Jocheinrichtung weißt ein Jochteil auf, das beiden Spulen gemeinsam zugeordnet ist, so dass es vom jeweiligen Magnetfeld beider Spulen durchgesetzt werden kann.

Das Dokument DE 44 05 657 A1 zeigt ein Magnetventil, welches sowohl als Einzelventil zum Schalten kleiner Durchflussmengen als auch als Vorsteuerventil für Ventile zum Schalten größerer Durchflussmengen eines Mediums verwendbar ist. Das Ventil weist ein quaderförmiges Ventilgehäuse auf, in dem zwei Dichtsitze und eine längliche Kammer gebildet sind. In dieser Kammer ist ein balkenfarbiger Anker lose und an einer stumpfen Kante schwenkbar aufgenommen.

Das Dokument EP 0 578 168 A1 zeigt ein Ventil mit einem Ventilgehäuse und mit einem im Gehäuse um eine Kippachse kippbar angeordneten Ventilglied zum Schließen oder Freigeben von Ventilöffnungen. Im Betrieb üben an den Ventilöffnungen herrschende Drücke Kippmomente auf das Ventilglied aus, welche jeweilige Kompensationskippmomente im wesentlichen aufheben.

Das Dokument EP 1 045 150 A2 zeigt ein Dreiwegeventil mit einem Ventilkörper, welcher derart ausgebildet ist, dass er die Form eines Parallelepipeds hat und welcher eine Mehrzahl von Anschlüssen hat, welche an einer ersten Seitenoberfläche nahe nebeneinander angeordnet sind.

Das Dokument EP 1 371 888 A1 zeigt ein Magnetventil, das einen Elektromagneten mit einem Klappanker aufweist. Der Klappanker befindet sich in einer Ventilkammer, die mit einer Installationsöffnung für die Installation des Klappankers versehen ist. Der Elektromagnet ist mit einer Jocheinrichtung ausgestattet, die mit einem Verschlussabschnitt unmittelbar die Installationsöffnung verschließt. Der Klappanker stützt sich rückseitig verschwenkbar an diesem Verschlussabschnitt ab.

Es ist Aufgabe der vorliegenden Erfindung ein Ventil, wie eingangs beschrieben, zu verbessern.

Die Aufgabe der Erfindung wird gelöst durch ein Ventil gemäß Anspruch 1, insbesondere ein Pneumatikventil, wobei an einem Betätigungsglied
ein Stößel vorgesehen ist, der eine Durchgangsöffnung für ein Medium je nach Stellung des Betätigungsgliedes öffnet oder schließt. Es ist dabei vorgesehen, dass zumindest die Federkraft einer Stößelfeder den Stößel in der geschlossenen Stellung auf die Durchgangsöffnung drückt. Vorteil der erfindungsgemäßen Ventilausführung ist, dass eine Federbeaufschlagung des Stößels erfolgt. Durch die direkte Federbeaufschlagung des Stößels wird der Dichtsitz wesentlich verbessert. Zudem wird sichergestellt, dass der entsprechende Stößel stets in die Dichtposition zurückgeführt wird, da diese Rückführung nicht durch die Betätigung beziehungsweise Verschiebung oder Verschwenkung des Betätigungsgliedes durchgeführt wird, sondern aufgrund der Federbeaufschlagung erfolgt. Es wird somit eine Unabhängigkeit von einer das Betätigungsglied führenden oder bewegenden Feder oder sonstigen Rückführvorrichtungen erreicht. Dadurch, dass durch die Stößelfeder der Stößel direkt, günstigerweise in einer linearen Bewegung, auf die Durchgangsöffnung gedrückt wird, somit eine über den Stößel vermittelte Wirkverbindung zwischen Stößelfeder und Durchgangsöffnung besteht, wird der Verschluss der Durchgangsöffnung dauerhaft und sicher gewährleistet, ein optimaler Dichtsitz mit geringer Leckage, ist so garantiert. Dieser optimale Dichtsitz führt dazu, dass die Leckagemengen des Ventils signifikant verringert werden können und somit insgesamt ein wesentlich zuverlässigeres und dauerhafteres Ventilsystem zur Verfügung gestellt werden kann, das beispielsweise auch für Dosieraufgaben im Klein- und Kleinstmengenbereich (ml bis µl) verwendbar ist. Die erfindungsgemäße Ausgestaltung des Ventils ist zudem unabhängig von der Ausführung des jeweils verwendeten Betätigungsgliedes. Das Betätigungsglied dient als Halterung und Führung für den Stößel, die eigentliche Betätigung des Stößel, das heißt, die Bewegung des Stößels in eine Schließposition an einer Durchgangsöffnung wird durch das Zusammenwirken der Bewegung des Betätigungsgliedes und der Stößelfeder erreicht. Hierdurch besteht zudem die Möglichkeit, dass die gesamte Vorrichtung wesentlich kompakter ausgelegt werden kann und daher für Einsatzbereiche zur Verfügung steht, in denen nur ein beschränktes Platzangebot für den Einbau vorhanden ist.

Eine bevorzugte Weiterbildung der Erfindung sieht vor, dass die Stößelfeder direkt auf den Stößel wirkt. Diese Ausgestaltung des erfindungsgemäßen Ventils bringt den Vorteil mit sich, dass hier eine unmittelbare Einwirkung auf den Stößel erfolgt und das Aufdrücken des Stößels auf die Druchgangsöffnung nicht vermittelt über das Betätigungsglied durchgeführt wird. Auch bringt die unmittelbare Anordnung der Stößelfeder am Stößel den weiteren Vorteil mit sich, dass die Anordnungsposition für die Feder leichter zugänglich ist und sich hieraus Vorteile bei der Montage des Systems ergeben. Aufgrund der bevorzugten Wirkrichtung der Feder, ist die Feder auf der der Durchlassöffnung abgewandten Seite des Stößels angeordnet und somit nicht im unmittelbaren Durchströmungsbereich, im Ventilraum oder der Ventilkammer. Hieraus resultiert, dass auch die Anordnung einer Stößelfeder für jeden Stößel den Strömungswiderstand im Ventil nach der Erfindung nicht erhöht. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Der Stößel ist im erfindungsgemäßen Ventil nach dem Hauptanspruch und den vorhergehenden Unteransprüchen in dem Betätigungsglied gelagert. Es besteht zum Einen die Möglichkeit, Stößel und Betätigungsglied einstückig auszubilden, daneben kann der Stößel fest mit dem Betätigungsglied verbunden werden und beispielsweise aus einem von dem Betätigungsglied abweichenden Material gefertigt sein. Eine als günstig angesehen Weiterbildung der Erfindung sieht vor, dass der Stößel mit Spiel im Betätigungsglied gelagert ist. Dies bringt den Vorteil mit sich, dass neben der Abfederung durch die Stößelfeder ein weiteres Ausgleichsmittel geschaffen wird, das verhindert, dass der Stößel ungefedert auf die Durchgangsöffnung bei Betätigung des Ventiles auftrifft. Hierdurch wird ein zu hoher Krafteintrag in das Betätigungsglied vermieden und der Schaltvorgang insgesamt vergleichmäßigt. Eine Lagerung des Stößels mit Spiel im Betätigungsglied bietet zudem die Möglichkeit einer weitergehenden Einstellung beziehungsweise Justierung des Stößels, entweder durch entsprechende Auslegung der Stößelfeder oder aber durch Variation der Stößelposition im Betätigungsglied. Auch hinsichtlich der Energieeffizienz des elektromagnetischen Antriebes für das Betätigungsglied bietet die bewegliche Lagerung des Stößel beziehungsweise eines als Nippel ausgebildeten Stößels Vorteile. Beim Betrieb des erfindungsgemäßen Ventils müssen durch das Betätigungsglied keine Unregelmäßigkeiten in der Durchgangsöffnung beziehungsweise im Stößel oder Nippel ausgeglichen werden. Es kann somit, insbesondere beim Betrieb mit einem Elektromagneten das Betätigungsglied vollständig an den Elektromagneten angezogen werden. Der zwischen Betätigungsglied und Elektromagnet bei herkömmlichen Ventilen auftretende Luftspalt, der mit einem Haltestrom einhergeht, kann somit komplett geschlossen werden. Hierdurch ergibt sich eine geringere Ruheleistung des Elektromagneten. Das optimale Aufdrücken und damit Verschließen der Durchgangsöffnungen durch den Stößel beziehungsweise Nippel, wird durch die Stößelfeder bewirkt, sodass das Betätigungsglied lediglich als Führungsmittel für den Stößel vorgesehen ist, während der eigentliche Verschluss für die Durchgangsöffnung durch das Zusammenwirken von Stößel und Stößelfeder erreicht wird.

Die Lagerung des Stößels mit Spiel erlaubt zudem einen Ausgleich von Maßungenauigkeiten, da hier immer noch eine Variationsmöglichkeit bezüglich des Andrückens des Stößels beziehungsweise Nippels gegeben ist. Maßungenauigkeiten ergeben sich beispielsweise durch Schwund oder Quellung des Stößels beziehungsweise Stößelmaterials, aber auch, nach einer gewissen Anzahl von Schaltzyklen, durch den Verschleiß des Stößels oder Nippels beziehungsweise der Durchgangsöffnung in Folge von Materialkompression und Dekompression beziehungsweise durch Kontakt mit den zu steuernden Medienflüssen.

Das Spiel des Stößels oder Nippels im Betätigungsglied ist dabei insbesondere in Richtung der Federkraft vorgesehen, so dass durch die Federbeaufschlagung des Stößels zunächst eine Verschiebung im Betätigungsglied erfolgt, bevor der Stößel auf die Durchgangsöffnung trifft und auf diese einwirkt. Letztendlich ist für das dichte Aufpressen des Stößels auf die Durchgangsöffnung die Stößelfeder verantwortlich, die Bewegung des Betätigungsgliedes sorgt dafür, dass der Stößel überhaupt in Wirkkontakt mit der Durchgangsöffnung gelangt.

Nach einer Variante der Erfindung ist es möglich, dass der Stößel als Nippel ausgebildet ist und unmittelbar auf die Durchgangsöffnung wirkt. Der als Nippel ausgebildete Stößel kann dabei nach Art eines Doppelnippels ausgeformt sein. Der zwischen den beiden Nippelteilen angeordnete Flansch dient zur Festlegung beziehungsweise zur Anordnung des Nippels im Betätigungsglied. Während der eine Teil des Nippels in die Rückstellfeder einsteht, wirkt der am Flansch gegenüberstehende Nippelteil auf die Durchgangsöffnung. Der Nippel kann dabei so ausgebildet sein, dass ein formschlüssiger Eingriff in die Durchgangsöffnung durch die Nippel realisiert werden kann. Anders als die Ausformung als Stößel, der die Durchgangsöffnung lediglich abdeckt, wird somit ein noch weiter verbesserter Abschluss der Durchgangsöffnung erreicht. Hierzu trägt auch die verringerte Auflagefläche zwischen Nippel und Durchgangsöffnung bei, sodass hier ein erhöhter Krafteintrag möglich ist, der die Abdichtung der Durchgangsöffnung weiter verbessert. In einer bevorzugten Ausgestaltung der Erfindung ist dabei der als Nippel realisierte Stößel aus einem elastischen Material, zum Beispiel einem Elastomergummi, wie EPDM oder ähnlichem, geschaffen, um eine zuverlässige Abdichtung der Durchgangsöffnung sicherzustellen. Insgesamt können alle im Zusammenhang mit dem Stößel beschriebenen Merkmale auf den Nippel übertragen werden und umgekehrt. Wird der Begriff Stößel oder Nippel verwendet, ist die Erfindung hierauf nicht beschränkt. Die Begriffe können vielmehr gegeneinander ausgetauscht werden. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Eine vorteilhafte Weiterbildung der Erfindung ist dadurch gekennzeichnet, dass zwischen dem vom Medium durchströmten Ventilraum und dem Stößel beziehungsweise Nippel eine Membran angeordnet ist und der Stößel beziehungsweise Nippel auf ein Membranteil zur Öffnung beziehungsweise zum Schließen der Durchgangsöffnung wirkt. Als Ventilraum ist der Bereich des Ventiles zu verstehen, der von dem über das Ventil gesteuerte Medium, beziehungsweise den Medienfluss vom Medium selbst durchflossen ist. Im Ventilraum angeordnet ist wenigstens eine Durchgangsöffnung für das über das Ventil zu steuernde Medium, beziehungsweise den Medienfluss. Der Ventilraum wird durch die Membran flüssigkeits-, beziehungsweise fluiddicht gegenüber den Betätigungselementen des erfindungsgemäßen Ventiles abgedichtet, so dass keinerlei fluidischer Kontakt zwischen den Betätigungselementen und dem Ventilraum besteht. Aufgrund der Flexibilität der Membranen kann jedoch dennoch ein Verschluss der Durchgangsöffnung, beziehungsweise der Durchgangsöffnungen durchgeführt werden. Der Vorteil dieser Ausgestaltungsform des erfindungsgemäßen Ventils ist darin zu sehen, dass ein völlig mediengetrennter Aufbau von Ventilkammer und Betätigungseinrichtung beziehungsweise Ankerraum des Ventiles erreicht wird. Mithin bleibt die Membran jedoch ausreichend flexibel, um einen dichten Sitz des Stößels beziehungsweise des Nippels auf der Durchgangsöffnung zu gewährleisten. Ist die Membran aus einem flexiblen Material (zum Beispiel Kunststoff, Elastomer, EPDM, Silikon, Gummi) mit einer ausreichenden Materialstärke gebildet, so wirkt diese bei Angriff des Nippels oder Stößels an der Durchgangsöffnung zusätzlich als elastisches Dichtelement, das den Dichtsitz weiter verbessert. Auch hier wird durch die Ausgestaltung des Stößels als Nippel ein noch besseres Aufpressen der Membran auf die Durchgangsöffnung und damit ein noch dichterer Abschluss erreicht. Die Leckagemengen können damit signifikant verringert und somit ein hochdichtes Ventilsystem, das sich beispielsweise auch für die Verwendung mit kritischen Medien eignet, zur Verfügung gestellt werden. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Ist die Membran elastisch ausgeführt, so unterstützt diese beim Abfallen des Betätigungsgliedes von einem magnetischen Öffnungsmechanismus, das Rückstellen des entsprechenden Stößels durch die Rückstellfeder. Durch den Stößel beziehungsweise Nippel wird bei der Beaufschlagung des entsprechenden Nippels zum Verschließen der Durchgangsöffnung ein der Durchgangsöffnung entsprechender Bereich der Membran vermittelt durch den Nippel in die Durchgangsöffnung ein- oder auf diese aufgepresst und verschließt diese damit zusätzlich.

Die Erfindung schlägt in einer weiteren Variante vor, dass die Bewegungsrichtung des Betätigungsgliedes im Wesentlichen rechtwinklig oder parallel zur Dichtungsfläche der Durchgangsöffnung verläuft. Diese Ausgestaltung des erfindungsgemäßen Ventils erlaubt eine Vielzahl von Konfigurationen. Es lassen sich hierdurch verschiedenste Konzepte beim Aufbau des erfindungsgemäßen Ventils realisieren und es bieten sich verschiedene Möglichkeiten zu Öffnen beziehungsweise Schließen einer Durchgangsöffnung. Erfolgt die Bewegung des Betätigungsgliedes parallel zur Dichtungsfläche, so wird der an dem Betätigungsglied angeordnete Stößel oder Nippel auf oder über die Durchgangsöffnung geschoben und verschließt diese beziehungsweise gibt diese frei. Gleichzeitig kann auch vorgesehen werden, dass bei einer entsprechenden Bewegung des Betätigungsgliedes durch den oder die Stößel beziehungsweise Nippel eine erste Durchgangsöffnung freigegeben, während eine zweite Durchgangsöffnung verschlossen wird. Diese Ausführung, nach Art eines Schiebers, erlaubt zusätzlich ein sukzessives Öffnen oder Schließen der Durchgangsöffnung. Erfolgt die Bewegung des Betätigungselementes rechtwinklig zur Dichtungsfläche der Durchgangsöffnung, so wird, bei Bewegung des Betätigungsgliedes, der Stößel oder Nippel senkrecht auf die Durchgangsöffnung aufgedrückt oder aufgepresst und verschließt beziehungsweise öffnet diese mehr oder weniger schlagartig. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Günstigerweise ist das Betätigungsglied als Klappanker ausgebildet. Als besonders günstig wird hierbei angesehen, wenn der Klappanker wippenartig oder als Wippanker vorgesehen ist. Der Klappanker beziehungsweise das Betätigungsglied kann an wenigstens einem Ende einen Stößel oder einen Nippel tragen, der wiederum, wie erfindungsgemäß vorgesehen, mit einer Stößelfeder verbunden ist beziehungsweise in eine Stößelfeder einsteht, sodass aufgrund der Federkraft der Stößelfeder der Stößel in der Schließstellung auf die Durchgangsöffnung gedrückt wird. Der Wippanker beziehungsweise Klappanker weist keine eigenen Rückstellelemente, wie beispielsweise dem Betätigungsglied zugeordnete Rückstellfedern auf (ohne diese erfindungsgemäß auszuschließen), sondern dient lediglich als Übertragungselement für die Antriebsenergie, die in das Ventil eingebracht wird. Das Verschwenken oder -klappen des Ankers wird durch die dem oder den Stößeln oder Nippeln zugeordneten Stößel- oder Nippelfedern unterstützt beziehungsweise geführt. Der Anker kann, je nach Ausführungsform, an verschiedenen Stellen des Ventils angeordnet werden beziehungsweise einen entsprechenden Anlenkpunkt aufweisen. Ist der Anker als Klappanker ausgebildet, so weist dieser einen Anlenkpunkt im Ventil oder Ventilgehäuse auf, um den der Anker dann verschwenkt werden kann. Wird der Anker als Wippanker, insbesondere mit an beiden Enden angeordneten Stößeln oder Nippeln ausgebildet, so ist es als günstig anzusehen, wenn im Anordnungs- oder Ankerraum ein entsprechender Steg angeordnet ist, auf dem der Anker aufliegt und um den dort vorgesehenen Auflagepunkt verschwenkt werden kann. Eine entsprechende Anordnung des Ankers wird bei der Ausbildung des Ankerraumes am Ventil, der beispielsweise als gesondertes Element im Ventilsystem vorgesehen werden kann, berücksichtigt.

Eine weitere als vorteilhaft angesehene Ausführungsform des erfindungsgemäßen Ventils sieht vor, dass das Betätigungselement als längsbeweglicher Anker ausgebildet ist. Diesem ist dann ebenfalls ein Stößel oder Nippel zugeordnet, der durch die Bewegung des Ankers auf eine Durchgangsöffnung aufgedrückt oder aufgeschoben wird und diese verschließt, beziehungsweise zusammen mit dem Stößel oder Nippel durch die Rückstell- oder Federkraft der Stößel- oder Nippelfeder aus einer Verschlussposition in eine Öffnungsposition für die Durchgangsöffnung verstellt werden kann. Um eine Bewegung des Ankers durchzuführen, wird dann der Antrieb des Ventils entsprechend ausgebildet beziehungsweise es werden Getriebe oder dergleichen vorgesehen, um die Bewegung des Antriebes in eine Längsbewegung des Ankers umzusetzen. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Die Erfindung schlägt in einer weiteren Variante vor, dass für die Bewegung des Betätigungsgliedes zumindest von der geöffneten zur geschlossenen Stellung des Ventiles oder der Durchgangsöffnung ein Antrieb vorgesehen ist. Der Antrieb kann dabei insbesondere als Elektromagnet, mechanisch bewegbarer Permanentmagnet, als Elektromotor oder als Piezoanordnung ausgebildet sein. Möglich ist selbstverständlich auch eine Kombination der verschiedenen Antriebsarten in ein und demselben Ventil, wobei die entsprechenden Antriebe dann auf unterschiedliche Bereich des Betätigungsgliedes wirken beziehungsweise zur Öffnung oder zum Verschließen unterschiedlicher Durchgangsöffnungen verwendet werden können, sofern diese direkt oder indirekt mit den Nippeln oder Stößeln zusammenwirken. Als vorteilhaft angesehen wird die Verwendung eines Elektromagneten, da über diesen die bestmögliche Steuerung des Betätigungsgliedes erreicht wird. Wird der Elektromagnet bestromt, so wird beispielsweise ein im Betätigungsglied vorgesehener magnetischer Körper oder das magnetische Betätigungsglied selbst, an die Spule beziehungsweise den Kern des Elektromagneten angezogen und dabei das Betätigungsglied von einer ersten in eine zweite Position verschwenkt oder verstellt. Mit dieser Verstellung oder Verschwenkung des Betätigungsgliedes wird der am Betätigungsglied angeordnete Stößel beziehungsweise Nippel von einer ersten in eine zweite Position verbracht und eine Stößelfeder, die direkt auf den Stößel und/oder auf das Betätigungsglied wirkt, komprimiert. Selbstverständlich kann durch die Bewegung des Betätigungsgliedes auch die gegenläufige Bewegung durchgeführt werden, das heißt, durch die Verstellung oder Verschwenkung des Betätigungsgliedes, der Stößel beziehungsweise Nippel von einer ersten in eine zweite Position verbracht wird, wobei eine Stößelfeder entspannt beziehungsweise teilweise entspannt wird und dabei den Stößel oder Nippel auf eine Durchgangsöffnung drückt, sodass diese durch den Stößel verschlossen wird. Durch diese Bewegung des Betätigungsgliedes und die dadurch bedingte Positionsänderung des Stößels wird dann beispielsweise eine Durchgangsöffnung entweder freigegeben, sodass hier ein Medienfluss erfolgen kann oder verschlossen, sodass ein Medienfluss zum Erliegen kommt. Durch entsprechende Schaltung wird die Bestromung des Elektromagneten beendet und das Betätigungsglied beziehungsweise der daran angeordnete Magnetkörper fällt von der Spule beziehungsweise dem Kern ab. Bedingt durch die Rückstellkraft der Stößelfeder wird mit dem Abfallen des Betätigungsgliedes vom Elektromagneten der Stößel und damit ebenfalls das Betätigungsglied von einer zweiten in eine erste Position zurückgeführt und der Stößel oder Nippel beispielsweise auf eine Durchgangsöffnung aufgepresst, wodurch diese verschlossen wird. Ist als Antrieb für das Betätigungsglied ein Permanentmagnet vorgesehen, so ist dieser mechanisch bewegbar und über diese mechanische Bewegung des Magneten eine entsprechende Positionierung eines Magnetfeldes bezüglich des Betätigungsgliedes durchführbar, die wiederum dazu führt, dass das mit einem Magnetkörper versehene und/oder magnetisch ausgebildete Betätigungsglied von einer ersten Position in eine zweite Position verbracht wird und dabei die vorher bereits im Zusammenhang mit einem Elektromagneten beschriebenen Effekte auftreten.

Ist der Antrieb als Elektromotor ausgebildet, was erfindungsgemäß ebenfalls möglich ist, so kann eine besonders präzise Steuerung der Verschluss- beziehungsweise Öffnungsbewegung des Betätigungsgliedes und/oder des daran angeordneten Stößels oder Nippels durchgeführt werden. Der Elektromotor kann als Schrittmotor ausgebildet sein. Eine schrittweise Variation der Öffnungsweite der Durchgangsöffnung kann über die schrittweise Betätigung des Motors erreicht und gesteuert werden. Hierfür können entsprechende Steuerungen vorgesehen werden. Ebenfalls verwendbar als Antrieb für das Betätigungsglied ist eine Piezoanordnung, wobei sich diese den inversen Piezoeffekt zunutze macht und aufgrund der Verformung bei Anlegen einer elektrischen Spannung eine Bewegung des Betätigungsgliedes und/oder der Stößel/Nippel erfolgt, die das Ventil beziehungsweise den die Durchgangsöffnung verschließenden Stößel oder Nippel von einer ersten in eine zweite Stellung verbringt. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Erfindungsgemäß ist vorgesehen, dass sich die Stößelfeder in einem längsbeweglichen, als Handtaster dienenden Betätigungskörper abstützt. Der Betätigungskörper kann bedarfsweise über die Stößelfeder auf den Stößel beziehungsweise das Betätigungsglied wirken. Der Betätigungskörper beziehungsweise der Handtaster kann dabei als Notbedienung für das Ventil vorgesehen werden. Besteht kein Bedarf an einer entsprechenden Notbedienung, so kann der Betätigungskörper durch die Kraft einer Rückstellfeder in einer nicht ausgelösten Position gehalten werden. Die Stößelfeder kann dann unabhängig von dem Betätigungskörper auf den Stößel wirken. Erst bei der Verwendung des Handtasters wird zunächst die dem Betätigungskörper zugeordnete Rückstellfeder komprimiert, wonach dann der Betätigungskörper auf die Stößelfeder wirkt, die dann wiederum ein entsprechendes Aufdrücken oder Aufpressen des Stößels oder Nippels auf die Durchgangsöffnung und damit deren Verschluss bewirkt. Die Federkraft der Rückstellfeder ist dabei signifikant höher als die Federkraft der Stößelfeder, sodass keine zufällige Kompression der Rückstellfeder im Zuge der Betätigung des Ventils erfolgen kann. Auch weisen die Federn

die gleiche Wirkrichtung auf, sodass eine unbeabsichtigte Kompression der Federn nicht möglich ist. Der Handtaster oder Betätigungskörper bewirkt die gleiche Bewegung des Betätigungsgliedes wie ein dem Betätigungsglied zugeordneter Antrieb, das heißt, es wird über den Handtaster die gleiche Betätigungsstellung erreicht, wie bei Verwendung eines entsprechenden, wie oben beschriebenen Antriebes. Aufgrund der längsbeweglichen Ausführungsform des Betätigungskörpers, beziehungsweise Handtasters wirkt dieser parallel zur Wirkrichtung der Feder, das
bedeutet, dass durch Betätigung des Tasters das Schließen einer Durchgangsöffnung durchgeführt werden kann, und bei entsprechender Ausgestaltung des Betätigungsgliedes oder Klappankers an anderer Stelle des Ventils eine Durchgangsöffnung geöffnet wird. Der Handtaster, Notschalter oder ein entsprechender Betätigungskörper hat somit die gleiche Funktion wie die Stößelfeder. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Eine weitere vorteilhafte Ausführungsform der Erfindung sieht vor, dass der Stößel zweiteilig ausgebildet ist und die Stößelfeder zwischen den Stößelteilen angeordnet ist, wobei sich die Stößelfeder wechselweise auf den Stößelteilen abstützt. Der zweiteilig ausgebildete Stößel ist am oder im Betätigungsglied angeordnet oder aufgenommen und die Stößelfeder, die zwischen den beweglich im Betätigungsglied gelagerten Stößelteilen angeordnet ist, wird bei geschlossener Stellung durch den auf die Durchgangsöffnung aufgedrückten Stößelteil komprimiert und verbessert aufgrund der Federkraft das Aufdrücken des Stößelteiles auf die Durchgangsöffnung. Die Stößelfeder stützt sich dabei am zweiten, ebenfalls im Betätigungsglied angeordneten Stößelteil, das sich wiederum im Betätigungsglied abstützt, ab. Bei einer gegenläufigen Bewegung, bei der der zweite Stößelteil beansprucht wird, erfolgt eine Abstützung der Stößelfeder auf dem ersten Stößelteil, das, wie oben bereits angemerkt, ebenfalls im Betätigungsglied gelagert beziehungsweise gehalten ist. Diese Ausführungsform des erfindungsgemäßen Ventils bietet die bereits vorgenannten Vorteile bei der Reduzierung der Leckagemengen und erlaubt dabei gleichzeitig eine besonders kompakte Bauform, da die Stößel und die Stößelfeder in das Betätigungsglied integriert werden können, so keine zusätzlichen Ausnehmungen oder Aussparungen für die Anordnung der Stößelfeder im übrigen Ventilkörper vorgesehen werden müssen.

Auch hier dient das Betätigungsglied zur Führung beziehungsweise als Haltemittel für den Stößel beziehungsweise Nippel. Ein nahezu leckagefreies Aufdrücken des Stößels beziehungsweise Nippels auf die Durchgangsöffnung erfolgt durch die Federbeaufschlagung durch die Stößelfeder. Diese erfolgt hier ebenfalls im wesentlichen linear, sodass ein gleichmäßiger Dichtsitz des Stößels oder Nippels auf der Durchgangsöffnung in der jeweiligen Verschlussposition gewährleistet ist. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Die Erfindung schlägt in einer weiteren Variante vor, dass das Betätigungsglied zwei Stößel trägt, wobei jeder der Stößel mit je einer Durchgangsöffnung zusammenwirkt, und zumindest die Federkraft einer Stößelfeder zumindest einen ersten Stößel in der geschlossenen Stellung auf die Durchgangsöffnung drückt, während der weitere Stößel die diesem Stößel zugeordnete Durchgangsöffnung öffnet. Ist das Betätigungsglied beispielsweise als Wippe oder Klappanker ausgebildet, so können die entsprechenden Stößel an gegenüberliegenden Enden des Ankers, beziehungsweise der Ankerwippe angeordnet werden. Aufgrund der Betätigung des Ankers erfolgt dann dessen Verschwenken oder Verklappen und damit einhergehend eine Positionsänderung der an den Enden des Ankers angeordneten Stößel. Durch Verschwenken des Ankers wird dabei eine erste Durchgangsöffnung, die einem ersten Stößel zugeordnet ist, geöffnet und gleichzeitig durch den zweiten Stößel eine zweite Durchgangsöffnung verschlossen, so dass es hier zu einer Änderung der Medienflüsse kommt. So kann beispielsweise in einer ersten Stellung ein Medium über einen Arbeitsanschluss zur Entlüftung strömen, während in einer zweiten Stellung das Medium über eine Druckversorgung zu einem Arbeitsanschluss strömen kann, da hier jeweils entsprechende Durchgangsöffnungen durch Stößel gesteuert verschlossen beziehungsweise freigegeben werden. Möglich ist selbstverständlich auch, dass die jeweiligen Durchgangsöffnungen an unterschiedlichen Seiten des Ventilraumes angeordnet sind und im Zuge einer Linearbewegung des Ankers bei Freigabe einer ersten Durchgangsöffnung der erste Stößel an eine zweite Durchgangsöffnung angedrückt wird und diese verschließt. Auch denkbar ist, dass bei einer Bewegung des Betätigungsgliedes parallel zur Dichtungsfläche der Durchgangsöffnung der entsprechende Stößel über die Durchgangsöffnung geschoben wird, diese dabei verschließt, während ein zweiter Stößel in eine Öffnungsposition verschoben wird, und dabei die ihm zugeordnete Durchgangsöffnung freigibt. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Die Erfindung ist sehr variabel einsetzbar. Sie umfasst Lösungen, bei welchen ein Stößel beziehungsweise Nippel für den Verschluss beziehungsweise die Freigabe einer Durchgangsöffnung dient. Die Erfindung umfasst aber auch Lösungen, bei welchen mit einem Stößel wechselweise ein Verschluss von verschiedenen Durchgangsöffnungen durchgeführt wird. Des Weiteren umfasst die Erfindung aber auch Lösungen, bei welchen das Betätigungsglied zwei oder mehrere unterschiedliche Stößel trägt, die ihrerseits jeweils einer Durchgangsöffnung zu deren Verschluss und Öffnung zugeordnet sind.

Als günstig erweist es sich, wenn zwischen den beiden Stößeln des erfindungsgemäßen Ventiles nach dem Hauptanspruch beziehungsweise einer der vorher beschriebenen Varianten und Ausführungsformen der Antrieb angeordnet ist. Hierdurch wird eine Verschwenk-, Verklapp- oder Verschiebebewegung des Ankers wesentlich vereinfacht, da der Antrieb zentral auf das Betätigungsglied wirkt und dieses von der ersten in die zweite Position verbringt, dabei gleichzeitig bewirkt, dass die beiden Stößel aus ihren jeweils der entsprechenden Stellung des Betätigungsgliedes zugeordneten Position in die zweite, durch den Stößel einnehmbare Position verschoben, verschwenkt oder verbracht werden. Um einen entsprechenden Krafteintrag beziehungsweise eine Umlenkung des Betätigungsgliedes durchführen zu können, besteht auch die Möglichkeit zur Verwendung von Getrieben. Durch die erfindungsgemäß vorgesehen Verschwenkbewegung des Betätigungsgliedes (Klapp- oder Wippanker) wird durch die konstruktive Anordnung, wie sie gerade beschrieben wurde, erreicht, dass auch mit verhältnismäßig kleinen Verstellwegen, also verhältnismäßig kleinen Luftspalten, die bei der Anzugsbewegung geschlossen werden, doch verhältnismäßig größere Stellwege für den Nippel beziehungsweise Stößel erreicht werden. Durch die Lagerung des Nippel beziehungsweise Stößels mit Spiel im Betätigungsglied, kann im Zuge des Klappens oder Verschwenkens des Betätigungsgliedes, dieses vollständig an beispielsweise einen Elektromagneten angelegt, der Luftspalt somit vollständig geschlossen werden. Hierdurch wird der Haltestrom signifikant verringert, da der Klapp- beziehungsweise Wippanker vollständig durchgezogen und der Luftspalt damit geschlossen wird. Der Elektromagnet, der erfindungsgemäß zum Einsatz mit dem Ventil vorgesehen ist, weist dadurch nur eine geringe Ruheleistung auf und dies führt zu einer Steigerung der Energieeffizienz der gesamten Vorrichtung.

In der Zeichnung ist die Erfindung insbesondere in verschiedenen Ausführungsbeispielen schematisch dargestellt. Es zeigen:
- Fig. 1a: eine erfindungsgemäße Ventilform mit einem Klappanker im unbestromten Zustand in der seitlichen Schnittdarstellung,
- Fig. 1b: das Ventil der Figur 1a im bestromten Zustand, ebenfalls in seitlicher Schnittdarstellung,
- Fig. 1c: das Ventil der Fig. 1a in unbestromten Zustand mit schematisch angedeuteten, weiteren Antriebsformen für den Klappanker,
- Fig. 2a: eine weitere Ausführungsform des erfindungsgemäßen Ventils im unbestromten Zustand in seitlicher Schnittdarstellung
- Fig. 2b: die Ausführungsform des Ventils aus Fig. 2a im bestromten Zustand, ebenfalls in seitlicher Schnittdarstellung

In den Figuren sind gleiche oder einander entsprechende Elemente jeweils mit den gleichen Bezugszeichen bezeichnet und werden daher, sofern nicht zweckmäßig, nicht erneut beschrieben.

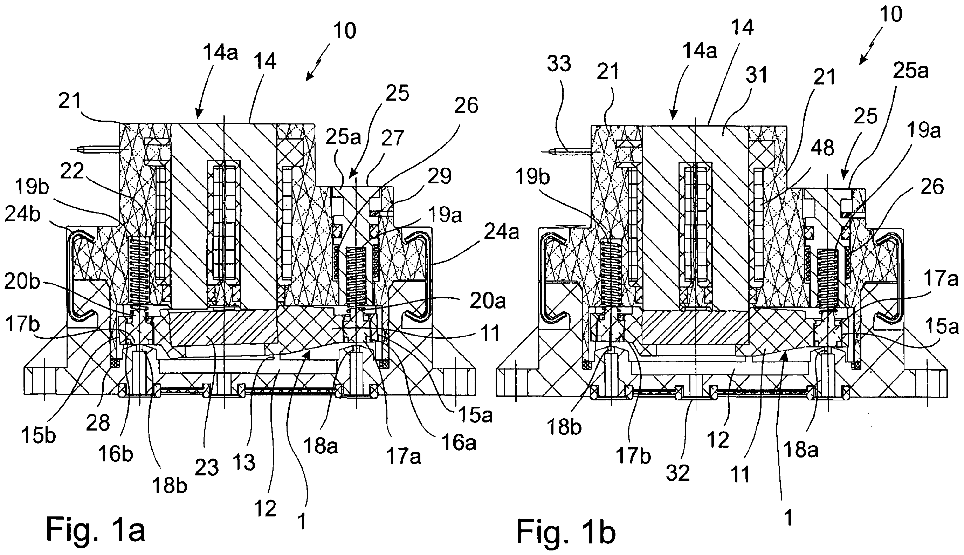

Fig. 1a zeigt eine Schaltstellung des erfindungsgemäßen Ventiles 10. Bei dem Ventil 10 handelt es sich um ein Magnetventil, das ein als Klappanker 11 ausgebildetes Betätigungsglied 1 aufweist, der oberhalb eines Ventilraumes 12 angeordnet ist. Der Klappanker 11 stützt sich auf einen ebenfalls im Ventilraum 12 positionierten Steg 13 ab und kann durch entsprechende Schaltung des Magnetkörpers 14 von einer ersten in eine zweite Schaltstellung verschwenkt werden. Der Klappanker 11 verfügt an seinen Enden 15a, b über Ausnehmungen 16a, b in die jeweils ein Stößel 17a, b eingesetzt ist.

Es wird darauf hingewiesen, dass nachfolgend die Erfindung unter Verwendung eines Stößels 17a, b beschrieben wird. Gleichermaßen besteht jedoch alternativ die Möglichkeit, anstelle eines Stößels 17a, b einen Nippel einzusetzen. Die Erfindung ist nicht auf die Verwendung eines Stößels 17a, b beschränkt, sondern umfasst sämtliche Ausführungsformen mit Stößel 17a, b und/oder Nippel.

Die Stößel 17a, b sind in den Ausnehmungen 16a, b mit Spiel gelagert, können somit bei Bedarf in ihrer Position verändert werden. Eine derartige Positionsänderung erfolgt beispielsweise bei Schaltung des Ventils 10, wenn einer der Stößel 17a, b auf die entsprechend dem jeweiligen Stößel 17a, b zugeordnete Durchgangsöffnung 18a, b aufgesetzt wird. Jeder Stößel 17a, b weist eine ihm zugeordnete Stößelfeder 19a, b auf, die eine Federkraft auf den Stößel 17a, b ausübt, die diesen in der geschlossenen Stellung auf die zugeordnete Durchgangsöffnung 18a, b drückt. Im Ausführungsbeispiel weist der Stößel 17a, b eine in Richtung der Stößelfeder 19a, b weisende Verlängerung 20a, b auf, die in die jeweilige Stößelfeder 19a, b einsteht. Die in Fig. 1a linke Stößelfeder 19a ist in einer Bohrung 22 im Gehäuse 21, das die Magnetkörper 14 aufnimmt, eingesetzt. Die Stößelfeder 19b stützt sich einerseits in der Bohrung 22 und andererseits am Stößel 17b ab. Bei einer Verschwenkung des Klappankers 11 wird über den Stößel 17b die Stößelfeder 19b komprimiert. Beim Abfallen des Klappankers 11 von der Magnetkörper 14 bewirkt die Rückstellkraft der Stößelfeder 19b eine Rückführung des Stößels 17b in Richtung der Durchgangsöffnung 18b und ein Andrücken des Stößels 17b an diese, wodurch ein Verschluss der Durchgangsöffnung 18b durchgeführt wird. Um mit der Magnetkörper 14 zusammenwirken zu können, weist der Klappanker 11 einen Einsatz 23 aus einem magnetisierbaren Material auf oder besteht komplett aus magnetischem Material.

Im Ausführungsbeispiels ist vorgesehen, dass der Antrieb, in Form eines Elektromagneten 14a als ein Bauteil und der Ventilraum 12 mit den Durchgangsöffnungen 18a, b, dem Klappanker 11 und den daran angeordneten Stößeln 17a, b als weiteres Bauteil zur Verfügung gestellt wird.

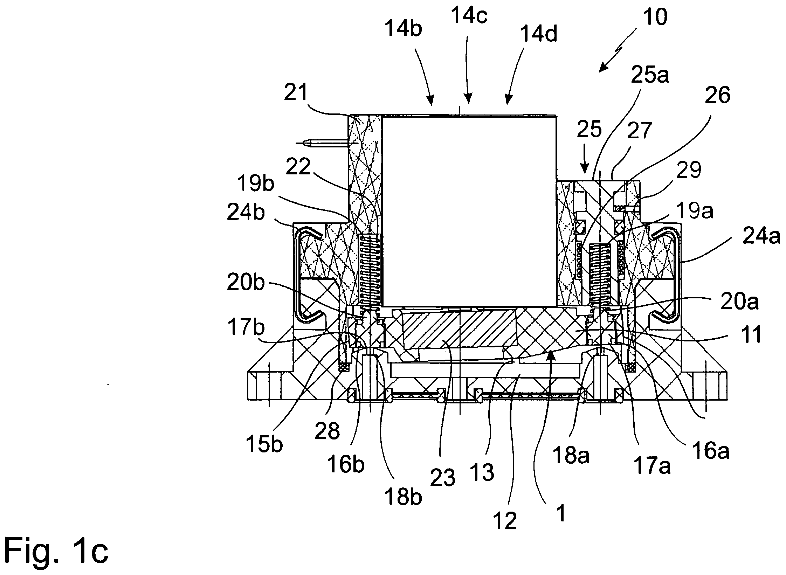

Wie in Fig. 1c schematisch dargestellt, kann als Antrieb anstelle des Elektromagneten 14a ein mechanisch bewegbarer Permanentmagnet 14b, ein Elektromotor 14c oder eine Piezoanordnung 14d verwendet werden. Diese wirken dann auf den Klappanker 11, um diesen zwischen den Schaltstellungen zu bewegen und werden bedarfsweise beziehungsweise in Anpassung an den jeweiligen Einsatzzweck an der gezeigten oder eine sonstigen als günstig angesehenen Einbauposition des Ventils 10 angeordnet.

Die Bauteile werden bei der Montage zusammengesetzt und über die Klammern 24a, b fixiert. Dem in Fig. 1a rechten Stößel 17a ist eine als Notfallbetätigung dienender beispielsweise als Handtaster 25 ausgebildete Betätigungskörper 25a zugeordnet. Dieser ist in einer entsprechenden Ausnehmung in dem Gehäuse 21 aufgenommen und weist eine sich im Gehäuse 21 abstützende Rückstellfeder 26 auf. Um eine Notbetätigung des Stößels 17a durchzuführen, beispielsweise um die diesem Stößel 17a zugeordnete Durchgangsöffnung 18a zu verschließen und die gegenüberliegende Durchgangsöffnung 18b nach Verschwenken des Klappankers 11 zu öffnen, wird die Rückstellfeder 26 durch Krafteintrag auf das obere Ende 27 des Betätigungskörpers 25a komprimiert. Im Zuge der weiteren Bewegung des Betätigungskörpers 25a erfolgt eine Beaufschlagung des Stößels 17a, wodurch dieser auf die Durchgangsöffnung 18a gepresst wird. Durch die Bewegung des Stößels 17a erfolgt auch ein Verschwenken des Klappankers 11, wobei der dort angeordnete weitere Stößel 17b die zweite Durchgangsöffnung 18b freigibt. Es kann hierdurch zu einer mechanischen Betätigung ohne Einschaltung des Antriebes des Ventils 10 kommen, sodass beispielsweise bei einem Stromausfall dennoch eine Schaltung des Ventils 10 beispielsweise zur Notauslösung, möglich ist.

Um eine Abdichtung des Magnetkörpers 14 gegenüber dem Ventilkörper 30 zu gewährleisten, ist das Einsetzen einer elastomeren Formdichtung oder O-Ringdichtung 28 vorgesehen.

Der Betätigungskörper 25a wird im Magnetkörper 14 durch ein Halteblech 29 gesichert, das nach dem Einsetzen des Betätigungskörpers 25a verprägt wird und den Betätigungskörper 25a somit gegen Herausfallen aus dem Magnetkörper 14 sichert. Der Klappanker 11 kann beispielsweise zur Gewichtsreduktion hauptsächlich aus einem Kunststoffmaterial gebildet werden. Im Klappanker 11 wird dann der Einsatz 23 eingefügt. Der Einsatz 23 besteht aus einem magnetischen Material und kann entweder in den Klappanker 11 eingesetzt oder in einem Spritz-Gießverfahren mit dem Material des Klappankers 11 umspritzt und somit in diesen eingebettet werden. Auch hinsichtlich des Stößels 17a, b besteht weitestgehende Freiheit bei der Wahl der verwendeten Materialien. Als besonders günstig erweisen sich Stößel 17a, b aus einem elastischen Kunststoffmaterial, die sich optimal an die Durchgangsöffnungen 18a, b beim Andrücken an diese anpassen und hier eine besonders vorteilhafte Abdichtung bewirken.

Fig. 1b stellt die bereits im Zusammenhang mit Fig. 1a beschriebene Ausführungsform des erfindungsgemäßen Ventiles 10 in einer weiteren Schaltstellung dar. Hier wurde die Spule 48 des Magnetkörpers 14 bestromt und dadurch der magnetische Teil des Klappankers 11 an das Joch 31 angezogen. Hierdurch erfolgte eine Kompression der in Fig. 1b linken Stößelfeder 19b, da der zugehörige Stößel 17b durch die Verschwenkbewegung des Klappankers 11 von der Durchgangsöffnung 18b abgehoben wird und diese damit freigibt. Zusammen mit dem Anheben des Stößels 17b erfolgt die Kompression der Stößelfeder 19b, die somit eine Federkraft speichert, die nach Abfallen des Klappankers 11 von dem Magnetkörper 14 beziehungsweise dem Joch 31 bewirkt, dass der Stößel 17b in seiner Ausgangsposition zurückgedrückt wird und die Durchgangsöffnung 18b verschließt. Durch die Bewegung des Klappankers 11 wurde einerseits die Durchgangsöffnung 18b geöffnet, andererseits die Durchgangsöffnung 18a, die dem Stößel 17a, der an einem weiteren Ende 15b des Klappankers 11 angeordnet ist, zugeordnet ist. Mit der Verschwenkung des Klappankers 11 erfolgt die Expansion der Stößelfeder 19a und damit das Aufdrücken des Stößels 17a auf die Durchgangsöffnung 18a. Der Betätigungskörper 25a verbleibt während des gesamten Schaltvorganges in seiner Ausgangsposition, in der er durch die Rückstellfeder 26, die sich im Gehäuse 21 des Magnetkörpers 14 abstützt, gehalten wird. Der Betätigungskörper 25a dient lediglich zur Notfallbedienung, das heißt, wenn beispielsweise bei einem Stromausfall ein elektromagnetisches Schalten des Ventiles 10 nicht möglich ist. Durch die Verschwenkung des Klappankers 11 erfolgt eine Änderung der Medienströmung durch den Ventilraum 12. Das Medium strömt jetzt über die durch Anheben des Stößels 17b geöffnete Durchgangsöffnung 18b, die mit der Druckversorgung der Vorrichtung in Verbindung steht, in den Ventilraum 12 ein und kann hier über den Arbeitsanschluss 32 den Ventilraum 12 verlassen. In der Stellung, wie in Fig. 1a dargestellt, wird die Durchgangsöffnung 18b, die mit der Druckversorgung verbunden ist, durch den Stößel 17b verschlossen, das heißt, in diesem Fall strömt das Medium über den Arbeitsanschluss 32 zur Durchgangsöffnung 18a, die für eine Entlüftung des Ventilraumes 12 verantwortlich ist.

Um eine Bestromung des Magnetkörpers 14 durchführen zu können, weist dieser an seinem oberen linken Ende eine elektrische Schnittstelle 33 auf, die entsprechende Anschlusskontakte umfasst, um mit einer Stromquelle verbunden zu werden.

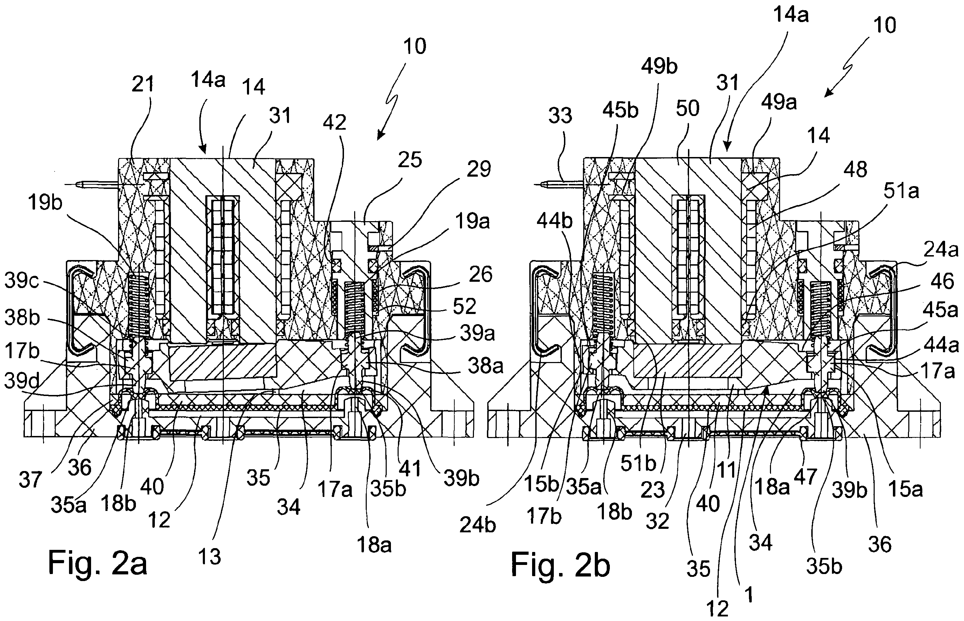

In Fig. 2a wird eine weitere mögliche Ausführungsform des erfindungsgemäßen Ventiles 10 dargestellt. In der dargestellten Ausführungsform wird ein vom Ventilraum 12 mediengetrennter Ankerraum 34 gezeigt. Diese Medientrennung wird erreicht durch eine Membran 35, die zwischen dem Ankerraum 34 und dem Ventilraum 12 eingezogen ist. Die Membran 35 wird in der Ventilplatte 36 verankert und über eine entsprechende Pressleiste 37 in ihrer Position fixiert. Die Membran 35 ist flexibel ausgestaltet und erlaubt somit, dass die im Ausführungsbeispiel der Fig. 2a als Nippel ausgebildeten Stößel 17a, b über die Membran 35 die Durchgangsöffnungen 18a, b verschließen. Aufgrund des elastischen Materials kann die Membran 35 teilweise in die Durchgangsöffnungen 18a, b eingepresst werden und diese damit fluiddicht verschließen. Beim Betrieb des Ventils ohne Membran 35 kann dieser Verschluss zusätzlich durch die Ausgestaltung der Stößel 17a, b als Nippel verbessert werden. Die Stößel 17a, b weisen neben einem zentralen Flansch 38a, b zwei gegenläufig ausgerichtete Enden 39a, b, c, d auf. Die Enden 39a, c stehen in die Stößelfedern 19a, b ein und stellen hier eine Kontaktfläche für die Stößelfedern 19a, b dar, die sich auf dem Flansch 38a, b zusätzlich abstützen. Die weiteren beiden Enden 39b, d sind kraftschlüssig mit der Membran 35 verbunden und drücken diese formgleich auf die Durchgangsöffnungen 18a, b.

Zusätzlich zur Membran 35 ist der Ankerraum 34 gegenüber dem Ventilraum 12 durch eine Platte 40 abgegrenzt, die auf ihrer dem Anker 11 zugewandten Oberseite entsprechende Auflagestege 13 für den Anker 11 aufweist, über die dieser bei Betätigung des Ventils 10 verschwenkt werden kann. Die Platte 40 mit Membran 35 kann als ein Bauteil hergestellt werden und vereinfacht dadurch die Montage des erfindungsgemäßen Ventiles 10. Zum Anker 11 hin weist die in der Platte 40 eingesetzte Membran 35 eine napfartige Aufwölbung 41 auf, die formschlüssig die Nippelenden 39b, d umschließen. Hierdurch wird die Abdichtung weiter verbessert.

Auch die Ausführungsform der Fig. 2a weist eine Notauslösung für das Ventil 10 auf. Diese besteht wiederum aus dem Betätigungskörper 25a, der über eine Rückstellfeder 26 im Gehäuse 21 des Magnetkörpers 14 gehalten wird. Zur Montage des Notauslösemechanismus' wird zunächst eine entsprechende Bohrung 52 im Gehäuse 21 vorgesehen, in diese wird die Rückstellfeder 26 eingesetzt, die sich auf dem Boden der Bohrung 52 abstützt. Hernach erfolgt ein Einsetzen einer Dichtung 42 und letztendlich das Einschieben des Betätigungskörpers 25a in die Bohrung 52. Um den Betätigungskörper 25a gegen Herausfallen aus dem Gehäuse 21 zu sichern, ist ein Halteblech 29 vorgesehen, das seitlich in das Gehäuse 21 eingeschoben wird und in entsprechende Zwischenräume zwischen an dem Betätigungskörper 25a vorgesehenen Krägen 43 eingreift. Bei Verwendung der Notauslösung wird der Betätigungskörper 25a in das Gehäuse eingedrückt und wirkt dabei direkt auf den Stößel 17a, wodurch dieser auf die Durchgangsöffnung 18a gepresst wird.

In Fig. 2b ist die Ausführungsform des Ventils 10 aus Fig. 2a in der Arbeitsposition dargestellt. Hierbei wurde der Magnetkörper 14 bestromt und es erfolgte somit eine Verschwenkung des Klappankers 11, der mit einer Freigabe der in Fig. 2b linken Durchgangsöffnung 18b durch Anheben des Stößels 17b erfolgte, einhergeht. Gleichzeitig mit der Freigabe der Durchgangsöffnung 18b erfolgt der Verschluss der Durchgangsöffnung 18a, da der Stößel 17a auf die Durchgangsöffnung 18a aufgedrückt wird. Die zwischengelagerte Membran 35 wird dabei zusammen mit dem Nippelende 39b des als Nippel ausgebildeten Stößels 17a auf die Durchgangsöffnung 18a aufgedrückt. Es kann so ein hochdichter Verschluss der Durchgangsöffnung 18a durchgeführt werden.

Das Ventil 10 besteht aus insgesamt vier funktionellen Bauteilen. Dabei handelt es sich zum Einen um den Magnetkörper 14, der den Antrieb für das gesamte Ventil 10 darstellt. Im Ausführungsbeispiel umfasst dieser Magnetkörper 14 einen Elektromagneten 14a, der entsprechende elektrische Schnittstellen 33 aufweist. Anstelle des Elektromagneten 14a könnte hier auch ein Permanentmagnet 14b, der über eine entsprechende Verschiebevorrichtung bewegbar ist, vorgesehen werden. Möglich wäre auch die Verwendung eines Elektromotors 14c oder einer Piezoanordnung 14d zur Betätigung des Klappankers 11.

Das weitere Bauteil ist der Klappanker 11, der im Ausführungsbeispiel die als Nippel ausgebildeten Stößel 17a, b beinhaltet. Der Klappanker 11 kann als gesonderte Bauteil beispielsweise aus einem Kunststoffmaterial gebildet werden und einen magnetischen Einsatz 23 aufweisen. Bei der Herstellung kann der Einsatz 23 mit dem Material des Klappankers 11 in einem Spritz-Gießverfahren umspritzt werden. Möglich ist selbstverständlich auch die Ausführung des Klappankers 11 ohne Einsatz und die nachträgliche Montage des Einsatzes 23 in den Klappankerrohling. Der Klappanker 11 weist an seinen Enden 15a, b ringförmige Aufnahmen 44a, b auf, in die die Stößel 17a, b eingesetzt sind. Die Stößel 17a, b sind mit Spiel in den Aufnahmen 44a, b gelagert. Um ein Herausfallen der Stößel 17a, b aus dem Klappanker 11 zu vermeiden, werden die Stößel 17a, b nach dem Einsetzen in die Aufnahmen 44a, b mit einem passenden Ring 45a, b verstemmt, wobei der Ring 45a, b lediglich die Oberseite 46 des Klappankers 11 abschließt, im Übrigen jedoch eine Bewegung des Stößels 17a, b in den Aufnahmen 44a, b zulässt.

Als weiteres Bauteil umfasst das erfindungsgemäße Ventil 10 die Platte 40 mit darin angeordneter Membran 35. Auch dieses Element des Ventils 10 kann als gesondertes Bauteil hergestellt werden, wobei das elastische Material der Membran 35 in entsprechende Ausnehmungen in der Platte 40 eingespritzt werden kann. Auch denkbar ist die zur Verfügungsstellung der Membran 35 und der Platte 40 als getrennte Teile, die vor dem Einsetzen in dem Ventil 10 zusammengefügt und als Bauteil zur Verfügung gestellt werden. Als letztes, viertes Bauteil des erfindungsgemäßen Ventils 10 ist die Ventilplatte 36 anzusehen, die die Durchgangsöffnungen 18a, b und den Arbeitsanschluss 32 umfasst. Unterseitig weist die Ventilplatte 36 eine zusätzliche Dichtung 47 auf, die die Verbindung der Durchgangsöffnungen 18a, b und des Arbeitsanschlusses 32 mit entsprechenden Zuleitungen oder dergleichen ermöglicht. Während in der Fig. 2a das Ventil 10 im geschlossenen, das heißt, Ruhezustand dargestellt ist, bei der der Klappanker 11 vom Magnetkörper 14 beziehungsweise dem Joch 31 abgefallenen Zustand dargestellt ist, zeigt die Fig. 2b das Ventil 10 im offenen, betätigten Zustand. Eine Öffnung wird hier dadurch erreicht, dass der Magnetkörper 14, insbesondere die Spule 48 bestromt wird, und somit zum Anziehen des Einsatzes 23, der aus einem magnetischen Material besteht, an das Joch 31 erfolgt.

Der Magnetkörper 14 weist einen zweigeteilten Spulenkörper 49a, b auf. Bei der Herstellung werden die beiden Spulenkörper 49a, b über ein verbindendes Element, das ein Filmschanier aufweist, miteinander verbunden. Bei der Montage wird das verbindende Element umgeklappt und die beiden Spulenkörper 49a, b werden parallel nebeneinander angeordnet. Nach dem Umklappen wird der Kern 50 in die Spulenkörper 49a, b eingesetzt und der aus den Spulenkörpern 49a, b herausragende Teil des Kernes 50 durch Dichtungen 51a, b, die über den Kern 50 beziehungsweise die aus den Spulenkörpern 49a, b vorstehenden Bereiche aufgeschoben. Bei den entsprechenden Dichtungen 51a, b handelt es sich um Dichtringe, die nach dem Aufsetzen auf die vorspringenden Kernbereiche aufgeschrumpt und anschließend mit einem entsprechenden Abschlussmaterial umspritzt werden. Hierdurch wird eine wesentlich verbesserte Abdichtung des Magnetkörpers 14 gegenüber dem Ankerraum 34 erreicht und die Konstruktion somit insgesamt dauerhafter gestaltet. Um die Ventilplatte 36 mit dem Magnetkörper 14 zu verbinden, werden Klammern 24a, b verwendet, die in zugehörige Nuten an der Ventilplatte 36 beziehungsweise dem Magnetkörper 14 eingesetzt werden und diese beiden Bauteile miteinander verspannen und so das fertige Ventil bilden.

## Patentansprüche

1. Ventil, insbesondere Pneumatikventil, wobei an einem Betätigungsglied (1) ein Stößel (17a) vorgesehen ist, der eine Durchgangsöffnung (18a) für das Medium je nach Stellung des Betätigungsgliedes öffnet oder schließt, und zumindest die Federkraft einer Stößelfeder (19a) den Stößel in der geschlossenen Stellung auf die Durchgangsöffnung drückt; **dadurch gekennzeichnet, dass** sich die Stößelfeder (19a) in einem längsbeweglichen, als Handtaster (25) dienenden Betätigungskörper (25a) abstützt, wobei der Betätigungskörper (25a) gegen die Kraft einer Rückstellfeder (26) bei Bedarf über die Stößelfeder (19a) auf den Stößel (17a) beziehungsweise das Betätigungsglied (1) wirkt.

2. Ventil nach Anspruch 1, **dadurch gekennzeichnet, dass** die Stößelfeder (19a) direkt auf den Stößel (17a) wirkt.

3. Ventil nach Anspruch 1 oder 2, **dadurch gekennzeichnet, dass** der Stößel (17a) mit Spiel im Betätigungsglied (1) gelagert ist.

4. Ventil nach einem der vorhergehenden Ansprüche, **dadurch gekennzeichnet, dass** der Stößel (17a) unmittelbar auf die Durchgangsöffnung (18a) wirkt.

5. Ventil nach einem der vorhergehenden Ansprüche, **dadurch gekennzeichnet, dass** der Stößel (17a) aus einem elastischen Material, insbesondere aus einem Elastomergummi, EPDM oder dergleichen geschaffen ist.

6. Ventil nach einem der vorhergehenden Ansprüche, **dadurch gekennzeichnet, dass** zwischen dem vom Medium durchströmten Ventilraum (12) und dem Stößel (17a) eine Membran (35) angeordnet ist, und der Stößel (17a) auf ein Membranteil zur Öffnung beziehungsweise zum Schließen der Durchgangsöffnung (18a) wirkt.

7. Ventil nach einem der vorhergehenden Ansprüche, **dadurch gekennzeichnet, dass** die Bewegungsrichtung des Betätigungsgliedes (1) im Wesentlichen rechtwinklig oder parallel zur Dichtungsfläche der Durchgangsöffnung (18a) ist.

8. Ventil nach einem der vorhergehenden Ansprüche, **dadurch gekennzeichnet, dass** das Betätigungsglied (1) als, insbesondere wippenartiger, Klappanker (11) ausgebildetist.

9. Ventil nach einem der vorhergehenden Ansprüche, **dadurch gekennzeichnet, dass** das Betätigungsglied (1) als längs beweglicher Anker ausgebildet ist.

10. Ventil nach einem der vorhergehenden Ansprüche, **dadurch gekennzeichnet, dass** für die Bewegung des Betätigungsgliedes (1) zumindest von der geöffneten zur geschlossenen Stellung des Ventils (10) oder der Durchgangsöffnung (18a) ein Antrieb vorgesehen ist und der Antrieb insbesondere als Elektromagnet (14a), mechanisch bewegbarer Permanentmagnet (14b), als Elektromotor (14c) oder als Piezoanordnung (14d) ausgebildet ist.

11. Ventil nach einem der vorhergehenden Ansprüche, **dadurch gekennzeichnet, dass** das Betätigungsglied (1) zwei Stößel (17a,b) trägt, die je mit einer Durchgangsöffnung (18a,b) zusammenwirken und zumindest die Federkraft einer Stößel feder (19a,b) zumindest einen ersten Stößel (17a,b) in der geschlossenen Stellung auf die Durchgangsöffnungen (18a,b) drückt und der andere Stößel (17a,b) die diesem Stößel (17a,b) zugeordnete Durchgangsöffnung (18a,b) öffnet.

12. Ventil nach Anspruch 11, **dadurch gekennzeichnet, dass** zwischen den beiden Stößeln (17a,b) der Antrieb angeordnet ist.

## Claims

1. Valve, in particular pneumatic valve, wherein at an actuator (1) a tappet (17a) is provided opening or closing a passage opening (18a) for the medium depending on the position of the actuator, and at least the spring force of a tappet spring (19a) presses the tappet on the passage opening in the closed position, **characterized in that** the tappet spring (19a) is supported in an longitudinally movable operating body (25a) serving as manual switch (25), wherein the operating body (25a) acts against the power of a pull-back spring (26), if necessary via the tappet spring (19a), on the tappet (17a) or the actuator (1).

2. Valve according to claim 1, **characterized in that** the tappet spring (19a) acts directly on the tappet (17a).

3. Valve according to claim 1 or 2, **characterized in that** the tappet (17a) is mounted with clearance in the actuator (1).

4. Valve according to one of the preceding claims, **characterized in that** the tappet (17a) acts immediately on the passage opening (18a).

5. Valve according to one of the preceding claims, **characterized in that** the tappet (17a) is made from an elastic material, in particular an elastomer rubber, EPDM, or the like.

6. Valve according to one of the preceding claims, **characterized in that** between the valve chamber (12) flown through by the medium and the tappet (17a) a membrane (35) is arranged, and the tappet (17a) acts on a membrane part for opening or closing the passage opening (18a).

7. Valve according to one of the preceding claims, **characterized in that** motion direction of the actuator (1) is essentially perpendicular or parallel to the sealing surface of the passage opening (18a).

8. Valve according to one of the preceding claims, **characterized in that** the actuator (1) is designed as in particular rocker-like, hinged armature (11).

9. Valve according to one of the preceding claims, **characterized in that** the actuator (1) is designed as longitudinally movable armature.

10. Valve according to one of the preceding claims, **characterized in that** for the movement of the actuator (1), at least from the opened to the closed position of the valve (10) or the passage opening (18a), a drive is provided, and the drive is configured in particular as solenoid (14a), mechanically movable permanent magnet (14b), electro-motor (14c) or piezoelectric array (14d).

11. Valve according to one of the preceding claims, **characterized in that** the actuator (1) carries two tappets (17a, b) each interacting with one passage opening (18a, b), and at least the spring power of a tappet spring (19a, b) presses at least a first tappet (17a, b) in the closed position on the passage openings (18a, b), and the other tappet (17a, b) opens the passage opening (18a, b) allocated to this tappet (17a, b).

12. Valve according to claim 11, **characterized in that** the drive is arranged between the two tappets (17a, b).

## Revendications

1. Soupape, en particulier soupape pneumatique, comportant au niveau d'un élément actionneur (1) un poussoir (17a) ouvrant ou fermant une ouverture traversante (18a) pour le fluide en fonction de la position de l'élément actionneur et utilisant au moins la force d'un ressort de poussoir (19a) pour appliquer en position fermée le poussoir sur l'ouverture traversante, **caractérisée en ce que** le ressort de poussoir (19a) est maintenu à l'intérieur d'un corps actionneur (25a) mobile selon la direction longitudinale et servant comme déclencheur manuel (25) de façon à ce que le corps actionneur (25a) agit contre la force d'un ressort de rappel (26), en cas de besoin via le ressort de poussoir (19a), sur le poussoir (17a) ou sur l'élément actionneur (1).

2. Soupape selon la revendication 1, **caractérisée en ce que** le ressort de poussoir (19a) agit directement sur le poussoir (17a).

3. Soupape selon la revendication 1 ou 2, **caractérisée en ce que** le poussoir (17a) est maintenu avec du jeu à l'intérieur de l'élément actionneur (1).

4. Soupape selon une des revendications précédentes, **caractérisée en ce que** le poussoir (17a) agit directement sur l'ouverture traversante (18a).

5. Soupape selon une des revendications précédentes, **caractérisée en ce que** le poussoir (17a) est fabriqué dans un matériau élastique, en particulier en caoutchouc d'élastomère, en EPDM ou en un matériau similaire.

6. Soupape selon une des revendications précédentes, **caractérisée en ce qu'**une membrane (35) est située entre la chambre de soupape (12), traversée par le courant du fluide, et le poussoir (17a) et **en ce que** le poussoir (17a) agit sur une partie de la membrane permettant ainsi d'ouvrir ou de fermer l'ouverture traversante (18a).

7. Soupape selon une des revendications précédentes, **caractérisée en ce que** la direction de mouvement de l'élément actionneur (1) est orientée essentiellement perpendiculairement ou parallèlement à la surface d'étanchéité de l'ouverture traversante (18a).

8. Soupape selon une des revendications précédentes, **caractérisée en ce que** l'élément actionneur (1) est configuré comme une armature à bascule (11).

9. Soupape selon une des revendications précédentes, **caractérisée en ce que** l'élément actionneur (1) est configuré comme une armature mobile selon une direction longitudinale.

10. Soupape selon une des revendications précédentes, **caractérisée en ce qu'**une commande est prévue pour le mouvement de l'élément actionneur (1), au moins de la position ouverte vers la position fermée de la soupape (10) ou de l'ouverture traversante (18a) et **en ce que** la commande est réalisée en particulier par un aimant électromagnétique (14a), un aimant permanent (14b) mobile, un moteur électrique (14c) ou par une configuration utilisant un élément piézo-électrique (14d).

11. Soupape selon une des revendications précédentes, **caractérisée en ce que** l'élément actionneur (1) comporte deux poussoirs (17a,b) agissant chacun sur une ouverture traversante (18a,b) et **en ce qu'**au moins la force d'au moins un ressort de poussoir (19a,b) pousse, en position fermée, au moins un premier poussoir (17a,b) contre les ouvertures traversante (18a,b) et **en ce que** l'autre poussoir (17a,b) ouvre l'ouverture traversante (18a,b) correspondante à ce poussoir (17a,b).

12. Soupape selon la revendication 11, **caractérisée en ce que** la commande est située entre les deux poussoirs (17a,b).
